(19) Europäisches Patentamt
European Patent Office
Office européen des brevets

(11) Veröffentlichungsnummer : **0 075 538**
**B1**

# (12) EUROPÄISCHE PATENTSCHRIFT

(45) Veröffentlichungstag der Patentschrift : **30.12.86**

(51) Int. Cl.[4] : **C 08 F220/30**, C 08 F220/40

(21) Anmeldenummer : **82810384.6**

(22) Anmeldetag : **13.09.82**

## (54) Polymerisierbare, Carboxylgruppen enthaltende Zusammensetzung.

(30) Priorität : **19.09.81 GB 8128383**
**04.06.82 GB 8216346**

(43) Veröffentlichungstag der Anmeldung : **30.03.83 Patentblatt 83/13**

(45) Bekanntmachung des Hinweises auf die Patenterteilung : **30.12.86 Patentblatt 86/52**

(84) Benannte Vertragsstaaten : **BE CH DE FR GB IT LI NL SE**

(56) Entgegenhaltungen :
**EP-A- 0 031 305**
**DE-A- 2 944 092**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Irving, Edward, Dr.**
**41, Swaffham Road**
**Burwell Cambridge CB5 0AN (GB)**

**EP 0 075 538 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erdindung betrifft eine Zusammensetzung, die ein Polymercaptan mit mindestens zwei SH-Gruppen, eine Verbindung mit zumindest zwei, bevorzugt mindestens drei, äthylenischen Doppelbindungen und einer weiteren äthylenisch ungesättigten Verbindung, die zumindest eine freie Carboxylgruppe enthält, sowie deren Polymerisation durch Einwirkung von Strahlung und/oder Wärme in Gegenwart wärmeaktivierbarer Radikalkatalysatoren und die Verwendung dieser Polymerisate zum Oberflächenschutz, als Klebstoffe, für verstärkte Verbundstoffe und besonders für gedruckte Schaltungen.

In der EP-A 0 031 305 sind durch Strahlung und/oder Wärme polymerisierbare Zusammensetzungen beschrieben, die eine Verbindung mit (Meth)Acryloxygruppen und (Meth)Allyl- oder 1-Propenylgruppen sowie eine Verbindung mit mindestens zwei SH-Gruppen im Molekül enthält. Bei der Verwendung als Schutzmasken während der Herstellung gedruckter Schaltungen wird nach der Belichtung durch eine Photomaske durch Lösen der unbelichteten Anteile mit einem organischen Lösungsmittel ein Bild erzeugt. Danach können die ungeschützten Anteile, die meist aus Kupfer bestehen, durch Aetzen entfernt und so eine Leiterzüge aufweisende Platte hergestellt werden. Bei der Herstellung von Mehrlagenschaltungen muss die Schutzmaske auf mechanischem Wege, z. B. Abschleifen, entfernt werden.

Nachteilig bei diesem Verfahren ist die Verwendung organischer Lösungsmittel, weil wegen toxischer Risiken und der leichten Brennbarkeit aufwendige Schutzvorrichtungen notwendig sind. Die mechanische Behandlung der Oberflächen birgt die Gefahr von Beschädigungen, was zu erhöhten Ausschussraten führt.

Aufgabe vorliegender Erfindung ist es, diese Nachteile zu vermeiden und die Entwicklung des Bildes sowie das Entfernen der Schutzmaske mit einem wässrig-alkalischen Lösungsmittel zu ermöglichen.

Ein Gegenstand vorliegender Erfindung ist eine polymerisierbare Zusammensetzung, enthaltend

a) eine Verbindung, die im Molekül (1) mindestens eine Acryloyloxy- und/oder Methacryloyloxygruppe und (2) mindestens eine Allyl-, Methallyl- und/oder 1-Propenylgruppe, die entweder direkt oder über ein Sauerstoffatom oder eine —OCO-Gruppe an ein Kohlenstoffatom eines aromatischen Ringes gebunden sind, enthält, wobei die Gesamtzahl der Gruppen (1) und (2) bevorzugt mindestens 3 ist,

b) eine Verbindung, die im Molekül (3) mindestens eine Acryloyloxy und/oder Methacryloyloxygruppe und (4) mindestens eine freie Carboxylgruppe enthält, und

c) eine Verbindung mit mindestens zwei an aliphatische C-Atome gebundene SH-Gruppen in einer Menge, dass auf eine Allyl-, Methallyl- und 1-Propenylgruppe in a) mindestens 0,8 SH-Gruppen und auf eine Acryloyl-, Methacryloyl-, Allyl-, Methallyl- und 1-Propenylgruppe in a) und b) weniger als 1,0 SH-Gruppen kommen.

Ein weiterer Gegenstand vorliegender Erfindung ist ein Verfahren zur Polymerisation dieser Zusammensetzung durch Einwirkung von Strahlung und/oder Wärme in Gegenwart wärmeaktivierbarer Radikalkatalysatoren sowie die so erhaltenen polymeren Produkte.

Komponente b) ist bevorzugt in einer Menge enthalten, dass auf eine Acryloyloxy- und Methacryloyloxygruppe in a) 0,75 bis 1,25 Acryloyl- und Methacryloylgruppen von b) kommen.

Die Komponente a) enthält bevorzugt keine anderen äthylenisch ungesättigten Gruppen als die zuvor erwähnten Gruppen und bevorzugt ist das Molekulargewicht der Komponente a) höchstens 5 000.

Bevorzugt sind die Acryloyloxy- und Methacryloyloxygruppen direkt an ein Kohlenstoffatom eines aromatischen Ringes gebunden oder über eine Gruppe der Formeln

$$-CH_2\underset{\substack{|\\ OH}}{C}HCH_2O- \quad (I) \qquad \text{oder} \qquad \left(-CH_2\underset{\substack{|\\ R}}{C}HO-\right)_a \quad (II)$$

worin R ein Wasserstoffatom oder Methyl und a eine Zahl von 1 bis 6 sind.

Komponente a) enthält pro Molekül bevorzugt mindestens zwei und höchstens 6 Acryloyloxy- und Methacryloyloxygruppen und mindestens zwei und höchstens fünfzehn Allyl-, Methallyl- und 1-Propenylgruppen. Insbesondere ist die Anzahl der Acryloyloxy- und Methacryloyloxygruppen in Komponente a) gleich der Anzahl der Allyl-, Methallyl- und 1-Propenylgruppen.

Bei dem oder den aromatischen Ringen in Komponente a) handelt es sich bevorzugt um Benzol- und Naphthalinringe.

Eine bevorzugte Gruppe von Verbindungen der Komponente a) sind mehrwertige, ein- oder mehrkernige Phenole, von denen mindestens 2 Hydroxylgruppen mit Acryl oder Methacryl entweder direkt oder über eine Gruppe der Formel I oder II verestert sind und mindestens 2 Hydroxylgruppen mit Allyl, Methallyl oder 1-Propenyl veräthert sind.

Eine weitere bevorzugte Gruppe von Verbindungen der Komponente a) sind Polycarbonsäuren, in denen mindestens eine Carboxylgruppe über Gruppen der Formeln I oder II mit Acryl oder Methacryl und mindestens eine Carboxylgruppe mit Allyl, Methallyl oder 1-Propenyl verestert sind.

Besonders bevorzugte Verbindungen der Komponente a) sind mehrwertige, ein- oder mehrkernige Phenole, in denen mindestens zwei Hydroxylgruppen entweder direkt oder über Gruppen der Formeln I oder II mit Acryl oder Methacryl verestert sind und in denen mindestens zwei Kohlenstoffatome der Benzol- oder Naphthalinringe durch Allyl, Methallyl oder 1-Propenyl substituiert sind, bevorzugt in Orthostellung zu den veresterten Hydroxylgruppen.

Beispiele für Verbindungen der Komponente a) sind solche der folgenden Formeln :

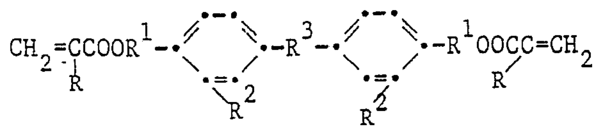

(III)

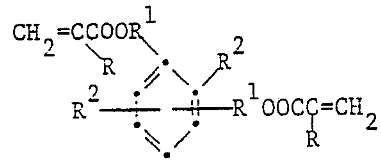

(IV)

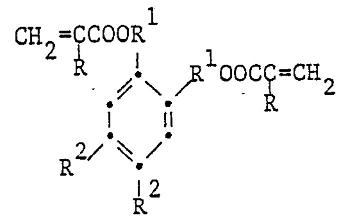

(V)

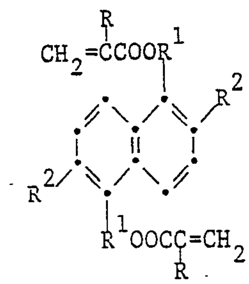

(VI)

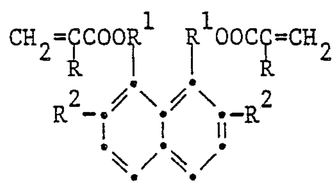

(VII)

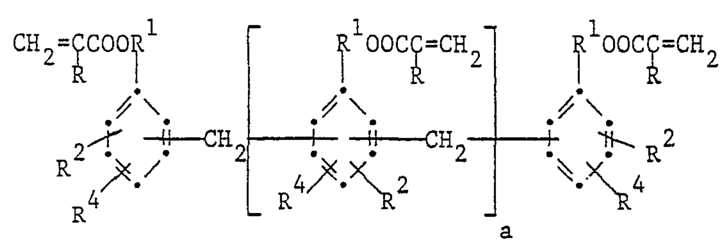

(VIII)

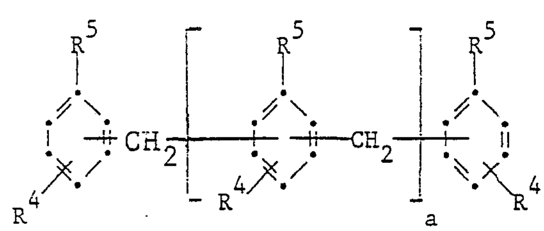

(IX)

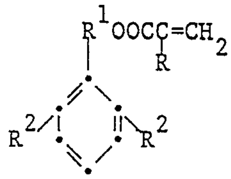

(X)

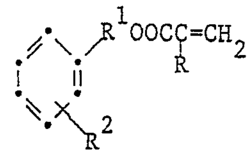

(XI)

und

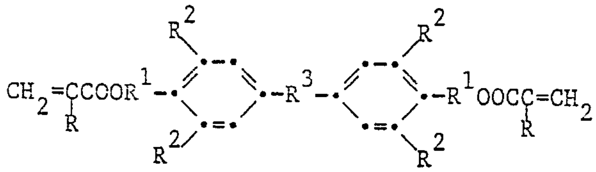

(XII)

worin

R und a die in Formel II definierte Bedeutung haben,

$R^1$ eine Sauerstoff-Kohlenstoffbindung oder eine Gruppe der Formeln I oder II ist,

$R^2$ für Allyl, Methallyl oder 1-Propenyl steht,

$R^3$ eine Kohlenstoff-Kohlenstoffbindung, Alkylen oder Alkyliden mit bis zu 5 C-Atomen, ein Sauerstoff- oder Schwefelatom oder eine Gruppe der Formeln —CO—, —SS—, —SO— oder $SO_2$ bedeutet,

$R^4$ ein Wasserstoff-, Chlor- oder Bromatom oder Alkyl mit 1-4 C-Atomen ist, und

$R^5$ $CH_2$=$CRCOOR^1$-, Allyloxy, Methallyloxy oder 1-Propenyloxy ist, wobei mindestens eine der $R^5$-Gruppen CH=$CRCOOR^1$- und mindestens zwei der $R^5$-Gruppen Allyloxy, Methallyloxy oder 1-Propenyloxy sind, mit der Massgabe, dass in den Formeln VIII und IX die —$CH_2$— und $R^2$-Gruppen in Ortho- oder Parastellung zur $CH_2$=$CRCOOR^1$- und $R^5$-Gruppe stehen.

Beispiele für Verbindungen der Komponente a) sind :

2,2-Bis(3-allyl-4-(methacryloyloxy)phenyl)propan, Bis(3-allyl-4-(methacryloyloxy)phenyl)methan, 2,2-Bis(3-methallyl-4-(methacryloyloxy)phenyl)propan, Bis(3-methallyl-4-(methacryloyloxy)phenyl)methan, 2,2-Bis-(3-(1-propenyl)-4-(methacryloyloxy)phenyl)propan, Bis(3-(1-propenyl)-4-(methacryloyloxy)phenyl)methan und ihre Acryloyl-Analogen ;

2,2-Bis(3-allyl-4-(3-methacryloyloxy)-2-(hydroxypropoxy)phenyl)-propan, Bis(3-allyl-4-(3-methacryloyloxy)-2-(hydroxypropoxy)phenyl)-methan, die entsprechenden Bis(3-methallyl)- und Bis(3-(1-propenyl))-Verbindungen und die Acryloyl-Analogen ;

2,2-Bis(3-allyl-4-(2-(methacryloyloxy)ethoxy)phenyl)propan, Bis(3-allyl-4-(2-(methacryloyloxy)ethoxy)phenyl)methan, 2,2-Bis(3-methallyl-4-(2-(methacryloyloxy)ethoxy)phenyl)propan, die entsprechenden Bis(3-methallyl)- und Bis(3-(1-propenyl))-verbindungen und die Acryloyl-Analogen ;

2,2-Bis(3-allyl-4-(2-(methacryloyloxy)-2-methylethoxy)phenyl)-propan, Bis(3-allyl-4-(2-(methocaryloyloxy)-2-methylethoxy)phenyl)-methan, die entsprechenden Bis(3-methallyl)- und Bis(3-(1-propenyl))-Verbindungen und die Acryloyl-Analogen ;

2,6-Diallylphenylacrylat, 2,6-Dimethallylphenylacrylat, 2,6-Di(1-propenyl)phenylacrylat und -methacrylat ;

1,3-Diallyl-2-(2-hydroxy-3-(methacryloyloxy)propoxy)benzol und die entsprechenden 1,3-Dimethallyl- und 1,3-Di(1-propenyl)-Verbindungen ;

1-Allyl-2-(2-methacryloyloxy)ethoxy)benzol, 1-Allyl-2-hydroxy-2-(methacryloyloxy)propoxy)benzol, 1-Allyl-2-(2-(methacryloyloxy)-2-methylethoxy)benzol und die entsprechenden Methallyl-Verbindungen und die Acryloyl-Analogen ;

1,3-Diallyl-2-(2-methacryloyloxy)ethoxy)benzol, 1,3-Dimethallyl-2-(2-methacryloyloxy)ethoxy)benzol, 1,3-Di(1-propenyl)-2-(2-(methacryloyloxy(ethoxy)benzol und die Acryloyl-Analogen ;

1,3-Diallyl-2-(2-(methacryloyloxy)-2-methylethoxy-benzol, 1,3-Dimethallyl-2-(2-(methacryloyloxy)-2-methylethoxy)-benzol, 1,3-Di(1-propenyl)-2-(2-methacryloyloxy)-2-(methylethoxy)benzol und die Acryloyl-Analogen ;

2,2-Bis(3,5-diallyl-4-(methacryloyloxy)phenyl)propan, Bis(3,5-diallyl-4-(methacryloyloxy)phenyl)methan, die entsprechenden Bis(3,5-dimethallyl)- und Bis(3,5-di(1-propenyl))-Verbindungen und die Acryloyl-Analogen ;

2,2-Bis(3,5-diallyl-4-(3-methacryloyloxy)2-(hydroxypropoxy)phenyl)-propan, Bis(3,5-diallyl-4-(3-methacryloyloxy)-2-hydroxypropoxy)methan, die entsprechenden Bis (3,5-dimethallyl)- und Bis(3,5-di(1-propenyl)-Verbindungen und die Acryloyl-Analogen.

Weitere mögliche Verbindungen für Komponente a) sind solche mit einer oder zwei Acryloyloxy- oder Methacryloyloxygruppen und nur einer Allyl-, Methallyl- oder 1-Propenylgruppe im Molekül. Die zweitgenannten Gruppen können an eine Oxycarbonylgruppe gebunden sein, welche direkt an ein Kohlenstoffatom eines aromatischen Ringes gebunden ist. Beispiele hierfür sind Verbindungen der Formeln XIII, XIV und XV

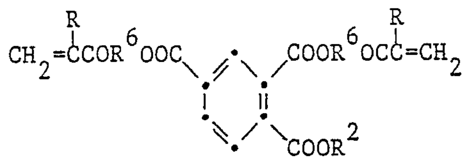

(XIII)

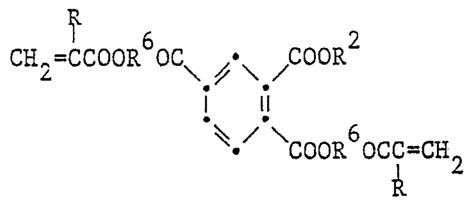

(XIV)

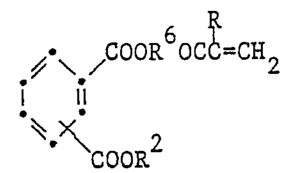

(XV)

worin

R die Bedeutung wie für Formel II definiert hat,
$R^2$ die Bedeutung wie für die Formeln III bis XII definiert hat, und
$R^6$ für Gruppen der Formeln I oder II steht.
Beispiele für Verbindungen der Formeln XIII bis XV sind :

1-(Allyloxycarbonyl)-2,4-bis(3-(methacryloyloxy)-2-hydroxy-propoxy-carbonyl)benzol, 1-(Allyloxycarbonyl)-2,5-bis(3-methacryloyloxy)-2-hydroxypropoxycarbonyl)benzol, 1-(Allyloxycarbonyl)-2,4-bis(methacryloyloxycarbonyl)benzol, 1-(Allyloxycarbonyl)-2,5-bis(methacryloyloxycarbonyl)benzol, die entsprechenden 1-(Methallyloxycarbonyl)-Verbindungen, die entsprechenden 1-(1-Propenyloxycarbonyl)-Verbindungen, 1-(Allyloxycarbonyl-2-(3-methacryloxy-2-hydroxypropoxycarbonyl)-benzol, 1-(Methallyloxycarbonyl)-2-(3-methacryloyloxy-2-hydroxypropoxycarbonyl)-benzol und die entsprechenden Acryloyloxy-Verbindungen.

Weitere Verbindungen für Komponente a), die zwei oder mehr Acryloyloxy- oder Methacryloyloxygruppen und eine oder mehr Allyl-, Methallyl- oder 1-Propenylgruppen enthalten, sind z. B. solche der Formel XVI

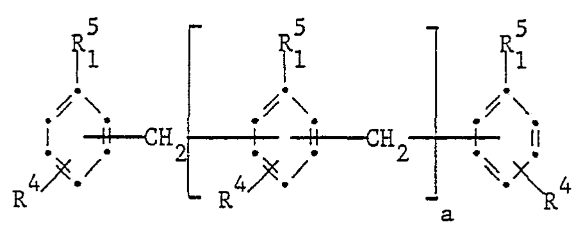

(XVI)

worin $R_1^5$ für $CH_2$=CRCOOR$^1$- oder Allyloxy, Methallyloxy oder 1-Propenyloxy steht, wobei mindestens zwei $CH_2$=CRCOOR$^1$-Gruppen und mindestens eine Allyloxy-, Methallyloxy- oder 1-Propenyloxygruppe zugegen sind, und a, R, $R^1$ und $R^4$ die zuvor angegebenen Bedeutungen haben.

Für die Komponente a) können auch Produkte verwendet werden, die 6 oder mehr, z. B. 12 Allyl-, Methallyl- oder 1-Propenylgruppen im Molekül enthalten und die durch Advancementverfahren erhalten werden können. Zum Beispiel kann man einen Diglycidyläther eines ein- oder mehrkernigen, zweiwertigen Phenols, der im Phenolkern durch Allyl-, Methallyl oder 1-Propenylgruppen substituiert ist, mit zweiwertigen Phenolen oder Alkoholen, einer Dicarbonsäure oder ein- oder zweikernigen Hydantoinverbindungen mit 2 NH-Gruppen vorreagieren. Danach kann das vorreagierte Produkt, das nach der Reaktion sekundäre Hydroxylgruppen enthält, mit Glycidyl(meth)acrylat oder (Meth)Acryloylchlorid weiter umgesetzt werden.

Andere vorreagierte Produkte können erhalten werden, indem man Diglydicyläther zweiwertiger

Phenole oder Alkohole oder N,N-Di-glycidylhydantoine wie 1,3-Diglycidylhydantoin oder 3,3'-Diglycidyl-1,1'-methylenbishydantoin mit zweiwertigen, ein- oder mehrkernigen Phenolen, die im Kern durch eine oder mehrere Allyl-, Methallyl- oder 1-Propenylgruppen substituiert sind, vorreagiert und anschliessend die gebildeten sekundären Hydroxylgruppen mit Glycidyl(meth)acrylat oder (Meth)Acryloylchlorid umsetzt.

Für Komponente a) sind auch Benzophenonderivate der Formel XVII geeignet.

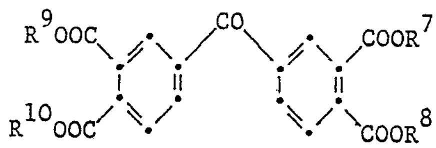

(XVII)

worin je eine der $R^7$- und $R^8$-Gruppen sowie $R^9$- und $R^{10}$-Gruppen gleich sind und Allyl oder Methallyl bedeuten und die jeweils übrigen $R^7$- und $R^8$- sowie $R^9$- und $R^{10}$-Gruppen den Rest eines Alkohols nach Entfernung der Hydroxylgruppe bedeuten, wobei dieser Rest eine (Meth)Acryloyloxygruppe enthält und besonders eine (Meth)Acryloyloxyalkylenoxy- oder (Meth)Acryloyloxyhydroxyalkylenoxygruppe darstellt. Besonders bevorzugt handelt es sich um eine Gruppe der Formel

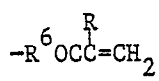

(XVIII)

worin R und $R^6$ die zuvor definierten Bedeutungen haben.

Die Photopolymerisation wird meistens in Gegenwart von Photoinitiatoren, z. B. Benzoin und dessen Alkyläther, vorgenommen, um die Belichtungszeiten zu verkürzen. Photoinitiatoren können die elektrischen Eigenschaften der Polymeren nachteilig beeinflussen sowie beim Erwärmen ausblühen. Es wurde gefunden, dass die Mitverwendung von Photoinitiatoren vermieden werden kann, wenn als Komponente a) Verbindungen der Formel XVII eingesetzt werden. Beispiele für solche Verbindungen sind Diallyl-bis(3-methacryloyloxy)-2-hydroxypropyl)-tetraester der Benzophenon-3,4,3',4'-tetracarbonsäure.

Verfahren zur Herstellung von für Komponente a) geeigneten Verbindungen sind in der EP-A-0 031 305 beschrieben.

Komponente b) weist bevorzugt ein Molekulargewicht von höchstens 1 000 auf. Besonders sind die (Meth)acryloyloxy-Gruppen an ein Wasserstoffatom oder direkt oder über eine Carboxyl enthaltende Gruppe an ein Kohlenstoffatom eines aliphatischen, cycloaliphatischen oder aromatischen Restes oder an ein Stickstoffatom eines heterocyclischen Rings gebunden. Die Carboxyl enthaltende Gruppe entspricht bevorzugt der Formel XIX

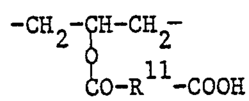

(XIX)

worin $R^{11}$ Alkylen, Arylen oder Aralkylen bedeutet, die durch ein oder mehr Carboxylgruppen substituiert sein können, wobei das Alkylen und der Alkylenanteil im Aralkylen 2 bis 10 Kohlenstoffatome und Arylen und der Arylenanteil im Aralkylen 6 bis 10 C-Atome enthält.

Bevorzugt enthält Komponente b) höchstens 6 Acryloyloxy- oder Methacryloyloxygruppen und höchstens 2 Carboxylgruppen im Molekül.

Die aromatischen Gruppen in Komponente b) sind bevorzugt Benzol- oder Naphthalinkerne.

Eine weitere bevorzugte Gruppe von Verbindungen für Komponente b) sind mehrwertige, ein- oder mehrkernige Phenole, in denen mindestens 2 Hydroxylgruppen über eine Gruppe der Formel XIX mit Acryloyloxy oder Methacryloyloxy verestert sind.

Beispiele für geeignete Verbindungen für Komponente b) sind solche der Formeln XX bis XXVII

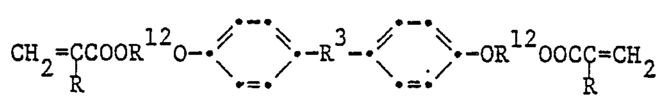

(XX)

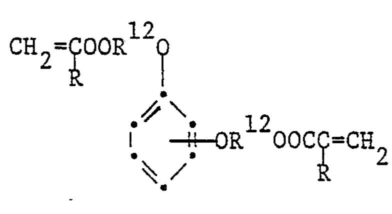

(XXI)

(Fortsetzung)

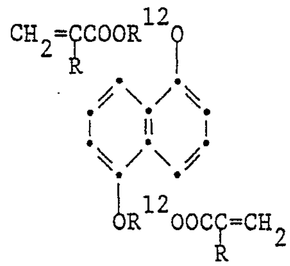

(XXII)

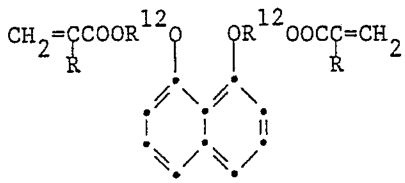

(XXIII)

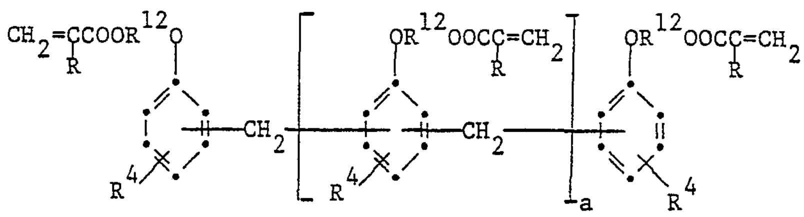

(XXIV)

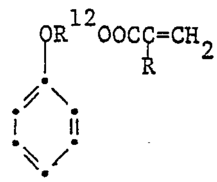

(XXV)

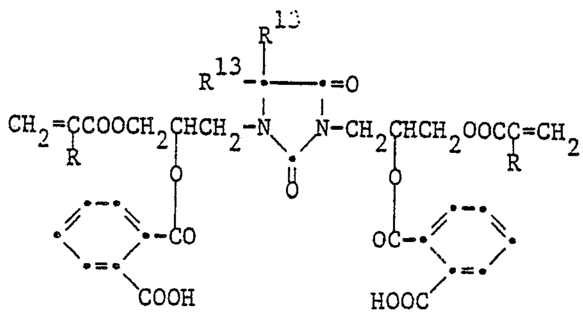

(XXVI)

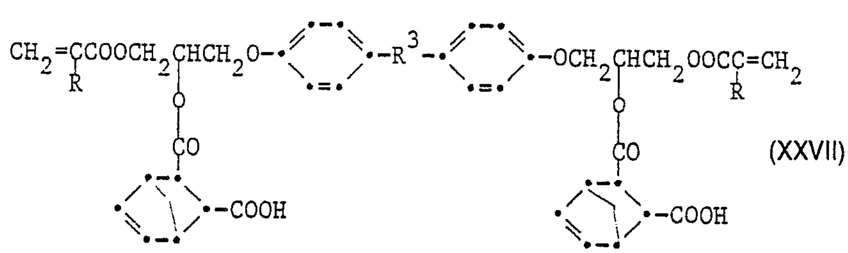

(XXVII)

worin R und $R^3$ die zuvor definierte Bedeutung haben, jedes $R^{12}$ eine Gruppe der Formel XIX ist, jedes $R^{13}$ Alkyl mit 1 bis 8 C-Atomen, besonders Aethyl oder Methyl, Aralkyl mit 7 bis 9 C-Atomen, Aryl mit 6 bis 8 C-Atomen ist, oder beide $R^{13}$ zusammen Tetra- oder Pentamethylen sind, mit der Massgabe, dass in Formel XXIV jede $CH_2$-Gruppe in Ortho- oder Para-Stellung zur $CH_2=C(R)COOR^{12}O$-Gruppe steht. Beispiele für solche Verbindungen sind die Partialester von Bernstein-, Malein-, Glutar-, Adipin-, Phthal-, Tetrahydrophthal-, Hexahydrophthal-, Endomethylentetrahydrophthal-, Pyromellit- oder Trimellitsäure folgender Alkohole : 2,2-Bis(3(methyacryloyloxy)-2-hydroxyprooxy)-phenyl)propan, Bis(4-(3-methacryloyloxy)-2-hydroxypropoxy)phenyl)methan und die Acryloylanalogen Verbindungen.

Weitere Verbindungen, die für die Komponente b) geeignet sind, enthalten 2 bis 4 Carboxylgruppen und 2 Acryloyloxy- oder Methacryloyloxygruppen, wie z. B. in den Formeln

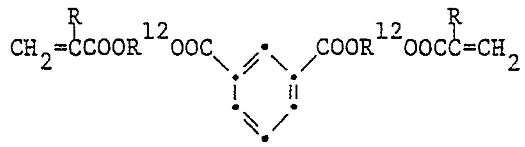

(XXVIII)

oder

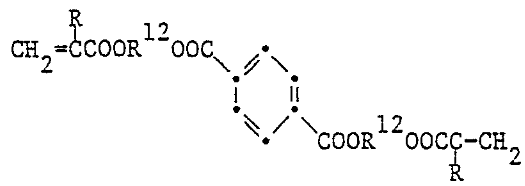

(XXIX)

worin R und $R^{12}$ die zuvor definierte Bedeutung haben. Beispiele für solche Verbindungen sind die Partialester von Bernstein-, Malein-, Glutar-, Adipin-, Phthal-, Tetrahydrophthal-, Hexahydrophthal-, Endomethylentetrahydrophthal-, Pyromellit- oder Trimellitsäure folgender Alkohole :

1,3-Bis(3-(methacryloyloxy)-2-hydroxypropoxycarbonyl)benzol,

1,4-Bis(3-(methacryloyloxy)-2-hydroxypropoxycarbonyl)benzol

und die entsprechenden Acryloyloxyverbindungen.

Andere Verbindungen, die für Komponente b) geeignet sind, haben die Formel

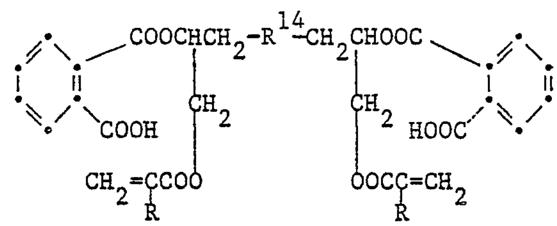

(XXX)

worin $R^{14}$ eine Gruppe der Formeln

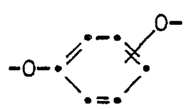

(XXXI)

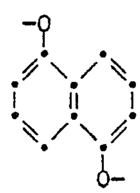

(XXXII)

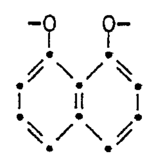

(XXXIII)

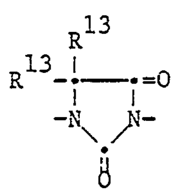

(XXXIV)

oder

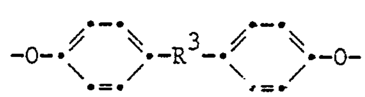

(XXXV)

ist und R, $R^3$ und $R^{13}$ die zuvor definierte Bedeutung haben.

Noch andere für Komponente b) geeignete Verbindungen sind z. B. Acrylsäure, Methacrylsäure und Verbindungen, in denen Acryloyloxy- oder Methacryloyloxygruppen an ein Kohlenstoffatom eines aliphatischen Restes gebunden sind, besonders Verbindungen der Formel XXXVI

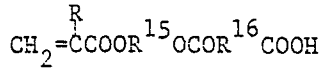

(XXXVI)

worin

R die zuvor definierte Bedeutung hat,

$R^{15}$ $-CH_2CH_2-$ oder $CH_2CH(CH_3)-$ ist und

$R^{16}$ der Rest zumindest einer Dicarbonsäure nach Entfernung beider Carboxylgruppen ist. Bevorzugt ist $R^{16}$ ein solcher Rest von Malein-, Bernstein-, Glutar-, Adipin-, Phthal-, Tetrahydrophthal-, Hexahydrophthal-, Endomethylentetrahydrophthal-, Trimellit- oder Pyromellitsäure.

Verbindungen der Formeln XX bis XXX werden durch entsprechende Glycidylderivate durch deren Reaktion mit (Meth)Acrylsäure und die anschliessende Veresterung der gebildeten, sekundären Hydroxylgruppe mit dem Anhydrid einer Di- oder Polycarbonsäure erhalten. Alternativ können die Verbindungen auch durch die Reaktion entsprechender Phenole, Alkohole, Amine oder Amidimine mit Glycidylacrylat oder Glycidylmethacrylat und nachfolgende Veresterung mit einem Anhydrid einer Di- oder Polycarbonsäure erhalten werden.

Verbindungen der Formel XXXVI sind durch Reaktion eines Di- oder Polycarbonsäureanhydrides mit 2-Hydroxyäthyl(meth)acrylat oder 2-Hydroxypropyl(meth)acrylat erhältlich.

Eine grosse Zahl Polymercaptane eignen sich zur Verwendung als Komponente c) in den erfindungsgemässen Zusammensetzungen. Die Mercaptane sind vorzugsweise frei von irgendwelchen Allyl-, Methallyl-, 1-Propenyl-, Acryloyl- oder Methacryloylgruppen und besitzen vorzugsweise ein Molekulargewicht von höchstens 3 000. Die eingesetzten Polymercaptane enthalten üblicherweise höchstens sechs direkt an aliphatische Kohlenstoffatome gebundene Mercaptangruppen pro Molekül und bevorzugt mehr als 2.

Eine Gruppe umfasst Ester von Monomercaptoalkylencarbonsäuren mit mehrwertigen Alkoholen sowie Ester von aliphatischen einwertigen Monomercaptoalkoholen mit Polycarbonsäuren.

Weitere bevorzugte derartige Ester entsprechen der Formel

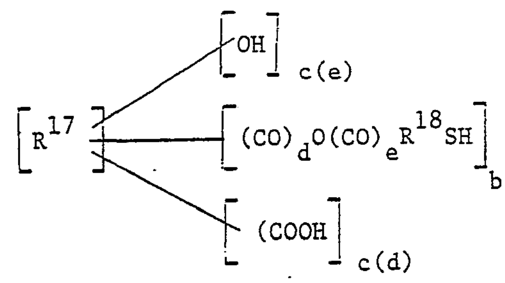

(XXXVII)

worin $R^{17}$ einen aliphatischen oder araliphatischen, gegebenenfalls in der Kette durch höchstens ein Aethersauerstoffatom unterbrochenen Kohlenwasserstoffrest mit 2 bis 60 Kohlenstoffatomen und $R^{18}$ einen aliphatischen, gegebenenfalls in der Kette durch höchstens eine Carbonyloxygruppe unterbrochenen Kohlenwasserstoffrest mit vorzugsweise 1 bis 4 Kohlenstoffatomen darstellen, b eine ganze Zahl von 2 bis 6, c null oder eine solche positive ganze Zahl von höchstens 3, dass (b + c) höchtens 6 betragen (wobei Symbole wie c(d) algebraisch zu betrachten sind), sowie d und e je null oder 1 aber verschieden sind.

Noch weitere bevorzugte Ester sind Polymercaptane der Formel XXXVIII

$$R^{19}(OCOR^{20})SH)_b \quad \text{(XXXVIII)},$$

worin b die unter der Formel XXXVII bezeichnete Bedeutung hat und $R^{19}$ einen aliphatischen Kohlenwasserstoffrest mit 2 bis 10 Kohlenstoffatomen und $R^{20}$ $-(CH_2)-$, $-(CH_2)_2-$ oder $-CH(CH_3)-$ bedeuten, entsprechen.

Eine zweite Klasse umfasst mercaptanhaltige Ester, einschliesslich Estern von Monomercaptodicarbonsäuren der Formel

$$R^{23}-[(O)_d-CO(O)_e-R^{21}(O)_e-CO(O)_d-R^{22}SH]_f \quad \text{(XXXIX)},$$

worin d und e die unter der Formel XXXVII bezeichneten Bedeutungen haben, f eine ganze Zahl von 1 bis 6 ist, $R^{21}$ einen zweiwertigen organischen Rest darstellt, der über eines oder mehrere seiner Kohlenstoffatome an die bezeichneten —O- oder —CO-Einheiten gebunden ist, $R^{22}$ einen zweiwertigen organischen Rest bedeutet, der über eines oder mehrere seiner Kohlenstoffatome an die bezeichnete —SH-Gruppe und —O- oder —CO-Einheit gebunden ist, und $R^{23}$ für einen organischen Rest steht, der bei f = 1 mindestens eine aliphatische —SH-Gruppe enthalten muss und bevorzugt für f = 2 zumindest eine SH-Gruppe enthält, und über eines bzw. mehrere seiner Kohlenstoffatome an die bezeichnete(n) benachbarte(n) —O- oder —CO-Einheit bzw. Einheiten gebunden ist.

Ist d null, so bedeutet $R^{21}$ vorzugsweise eine gesättigte aliphatische unverzweigte, gegebenenfalls durch eine oder mehrere Methylgruppen und eine oder mehrere Mercaptogruppen substituierte und gegebenenfalls durch ein oder mehrere Aethersauerstoffatome und eine oder mehrere Carbonyloxygruppen unterbrochene Kohlenwasserstoffkette mit 2 bis 20 Kohlenstoffatomen. Ist d 1, so bedeutet $R^{21}$ vorzugsweise (i) eine gesättigte aliphatische, gegebenenfalls eine Mercaptogruppe tragende Kohlenwasserstoffgruppe mit 2 bis 10 Kohlenstoffatomen, (ii) eine cycloaliphatisch-aliphatische, gegebenenfalls eine oder mehrere äthylenisch ungesättigte Doppelbindungen aufweisende Kohlenwasserstoffgruppe mit 5 bis 34 Kohlenstoffatomen oder (iii) eine einkernige Arylenkohlenwasserstoffgruppe mit 6 bis 12 Kohlenstoffatomen.

Wenn d null ist, bedeutet $R^{22}$ vorzugsweise eine gesättigte aliphatische, gegebenenfalls eine Carboxylgruppe tragende Kohlenwasserstoffgruppe mit 1 bis 3 Kohlenstoffatomen sowie, wenn d 1 ist, eine gesättigte aliphatische, gegebenenfalls durch eine Hydroxylgruppe oder ein Chloratom substituierte Kohlenwasserstoffgruppe mit 2 bis 4 Kohlenstoffatomen.

$R^{23}$ bedeutet vorzugsweise (iv) eine aliphatische oder cycloaliphatisch-aliphatische, gegebenenfalls mindestens eine aliphatische Mercaptogruppe tragende Kohlenwasserstoffgruppe mit 2 bis 51 Kohlenstoffatomen oder (v) eine einkernige oder zweikernige Arylenkohlenwasserstoffgruppe mit 6 bis 15 Kohlenstoffatomen oder (vi) eine durch mindestens ein Aethersauerstoffatom unterbrochene und gegebenenfalls durch mindestens eine aliphatische Mercaptogruppe substituierte Kette von 4 bis 20 Kohlenstoffatomen oder (vii) eine durch mindestens eine Carbonyloxygruppe und gegebenenfalls durch mindestens ein Aethersauerstoffatom unterbrochene und gegebenenfalls durch mindestens eine aliphatische Mercaptogruppe substituierte Kette von 6 bis 50 Kohlenstoffatomen.

Eine dritte Klasse umfasst Ester und Aether der allgemeinen Formel

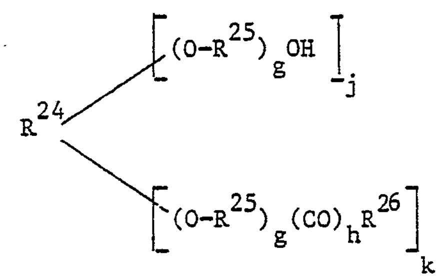

(XL)

worin $R^{24}$ den Rest eines mehrwertigen Alkohols nach Wegnahme von (j + k) alkoholischen Hydroxylgruppen, insbesondere einen aliphatischen Kohlenwasserstoffrest mit 2 bis 10 Kohlenstoffatomen darstellt, die $R^{25}$ jeweils eine Alkylengruppe mit einer Kette von mindestens 2 und höchstens 6 Kohlenstoffatomen zwischen den bezeichneten aufeinanderfolgenden Sauerstoffatomen bedeuten, $R^{26}$ für einen aliphatischen, mindestens eine Mercaptangruppe enthaltenden Rest mit 1 bis 6 Kohlenstoffatomen steht sowie g eine positive ganze Zahl, vorzugsweise eine solche, dass das Durchschnittsmolekulargewicht des Polymercaptans 2 000 nicht übersteigt, h null oder 1, j null oder eine solche positive ganze Zahl, dass (j + k) höchstens 6 beträgt, und k eine ganze Zahl von 2 bis 6, bevorzugt von 3 bis 6, sind.

Die Gruppen $R^{25}$ in einzelnen Poly-(oxyalkylen)-ketten können gleich oder verschieden und gegebenenfalls durch z. B. Phenyl- oder Chlormethylgruppen substituiert sein. Vorzugsweise sind dies $—C_2H_4$- oder $—C_3H_6$-Gruppen.

Unter den Verbindungen der Formel XL werden die Ester der Formel

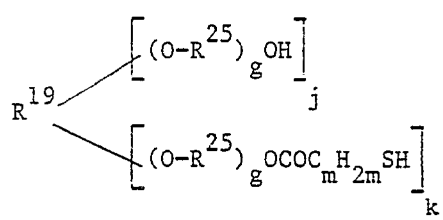

(XLI)

und die Aether der Formel

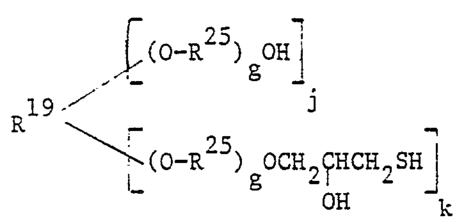

(XLII)

worin $R^{19}$ die unter der Formel XXXVIII und $R^{25}$, g, j und k unter der Formel XL angegebenen Bedeutungen haben und m 1 oder 2 ist, bevorzugt.

Eine vierte Klasse von als Komponente c) geeigneten Polymercaptanen umfasst Sulfide mit Mercaptanendgruppen der allgemeinen Formel

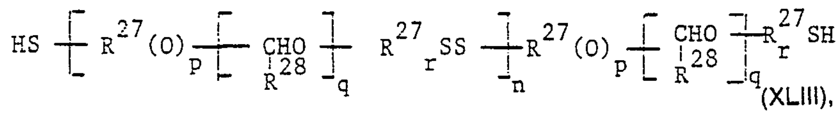

(XLIII),

worin die $R^{27}$ jeweils eine Alkylenkohlenwasserstoffgruppe mit 2 bis 4 Kohlenstoffatomen bedeuten, $R^{28}$ ein Wasserstoffatom oder eine Methyl- oder Aethylgruppe darstellt, n eine ganze Zahl mit einem Mittelwert von mindestens 1 und vorzugsweise eine solche, dass das Durchschnittsmolekulargewicht des Sulfids höchstens 1 000 beträgt, und p entweder null, wobei q und r dann beide ebenfalls null sind, oder 1, wobei q dann null oder 1 und r 1 ist, sind.

Bevorzugt werden solche Sulfide der Formel XLIII, worin $R^{28}$ Wasserstoff bedeutet sowie p und q je 1 sind, wobei n einen solchen Wert annimmt, dass das Molekulargewicht des Sulfids 500 bis 800 beträgt.

Eine fünfte Klasse als Komponente c) geeigneter Polymercaptane umfasst Polybutadiene mit Mercaptanendgruppen der Formel

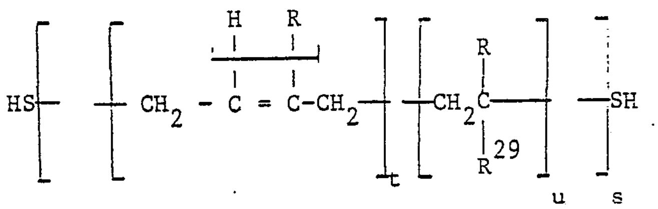

(XLIV),

worin die R jeweils die unter der Formel II bezeichnete Bedeutung haben $R^{29}$ für $-CN$, $-COOH$, $-CONH_2$, $-COOR^{30}$, $-C_6H_5$ oder $-OCOR^{30}$ steht, wobei $R^{30}$ eine Alkylgruppe mit eins bis acht Kohlenstoffatomen bedeutet, sowie t eine ganze Zahl von mindestens eins, u null oder eine positive ganze Zahl und s eine ganze Zahl grösser als eins, vorzugsweise eine solche, dass das Molekulargewicht des Polymercaptans im Zahlenmittel 1 000 nicht übersteigt, sind.

Eine sechste Klasse von Polymercaptanen zur Verwendung als Komponente c) umfasst Oxyalkylenverbindungen mit Mercaptanendgruppen der allgemeinen Formel

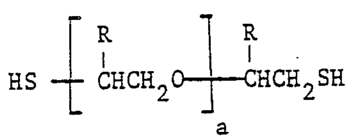

(XLV),

worin die R sowie a jeweils die unter Formel II bezeichnete Bedeutung haben.

Eine siebente Klasse umfasst Poly-(thioglykolate) und Poly-(mercaptopropionate) des Tris-(2-hydroxyäthyl)-isocyanurats und Tris-(2-hydroxypropyl)-isocyanurats, sowie N,N'-Bis(2-hydroxyäthyl)- und N,N'-Bis(2-hydroxypropyl)-hydantoine, d. h. Verbindungen der Formeln

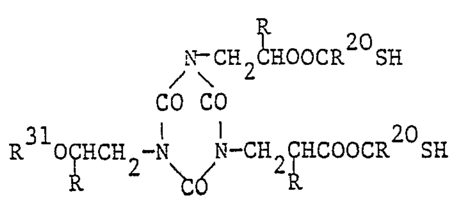

(XLVI)

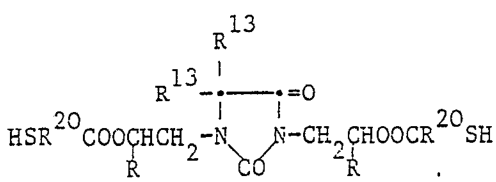

(XLVII),

worin R die unter Formel II, $R^{13}$ die unter Formel XXVI und $R^{20}$ die unter Formel XXXVIII angegebenen Bedeutungen haben und $R^{31}$ eine $HSR^{20}-CO$-Gruppe oder ein Wasserstoffatom ist.

Besondere Beispiele für geeignete Polymercaptane c) sind Pentaerythrittetrathioglykolat, Dipentaerythrithexa(β-mercaptopropionat), Aethylenglykoldithioglycollat, ein Tris(3-mercapto-3-hydroxypropy-

läther) eines Polyoxypropylentriols mit einem mittleren Molekulargewicht von 800, ein Polysulfid der mittleren Formel

$$HS(C_2H_4OCH_2OC_2H_4SS)_6C_2H_4OCH_2OC_2H_4SH \qquad (XLVIII)$$

N,N',N''-Tris(2-(mercaptoacetyloxy)ethyl)-1,3,5-triazin-2,4,6-trion und 1,3-Bis(2-(mercaptoacetyloxy)ethyl)-5,5-dimethylhydantoin.

Bei der Photopolymerisation der erfindungsgemässen Zusammensetzungen verwendet man vorzugsweise aktinische Strahlung von 200-600 nm Wellenlänge. Als aktinische Strahlungsquelle eignen sich unter anderem Kohlelichtbögen, Quecksilberdampflichtbögen, Fluoreszenzlampen mit ultraviolettes Licht ausstrahlenden Leuchtstoffen, Argon- und Xenonglimmlampen, Wolframlampen und photographische Flutlampen. Darunter sind Quecksilberdampflichtbögen, insbesondere Höhensonnen, fluoreszierende Höhensonnen und Metallhalogenidlampen am besten geeignet. Die zur Belichtung der photopolymerisierbaren Zusammensetzung erforderliche Zeit hängt dabei von verschiedenen Faktoren ab, unter anderem beispielsweise den jeweils verwendeten Verbindungen, der Art der Lichtquelle und deren Abstand von der bestrahlten Zusammensetzung. Der mit der Photopolymerisationstechnik vertraute Fachmann kann ohne weiteres geeignete Zeiten festlegen.

Zur Photopolymerisation enthalten die Zusammensetzungen (ausser denen, die eine Verbindung der Formel XVII enthalten) einen zugesetzten Photoinitiator, d. h. einen Katalysator, der bei Bestrahlung in einen angeregten Zustand übergeht, der zur Bildung freier Radikale führt, die dann die Polymerisation der Zusammensetzung einleiten. Geeignete Photoinitiatoren sind in der EP-A-0 031 305 beschrieben. Sie werden im allgemeinen in einer Menge von 0,05 bis 10, vorzugsweise 0,5 bis 5 Gew.% einverleibt, bezogen auf die Menge der Komponenten a), b) und c).

Zur Polymerisation der erfindungsgemässen Zusammensetzungen geeignete Radikalkatalysatoren werden durch Hitze aktiviert, d. h. sie besitzen eine ziemlich schnelle Polymerisationswirkung nur bei Temperaturen oberhalb normaler Raumtemperatur. Geeignete Katalysatoren sind in der EP-A 0 031 305 beschrieben.

Die Menge Radikalkatalysator, gegebenenfalls einschleisslich eines Beschleunigers dafür, beträgt üblicherweise 0,05 bis 5 Gew.%, und vorzugsweise 0,1 bis 1 Gew.%, berechnet auf das Gesamtgewicht der Komponenten a), b) und c). Es können die üblichen Methoden für die durch Radikalkatalysatoren eingeleitete Polymerisation angewandt werden.

Die erfindungsgemässen Zusammensetzungen eignen sich als Oberflächenbeschichtungen, zur Herstellung von Druckplatten, gedruckten Schaltungen, faserverstärkten Verbundstoffen und faserverstärkter Körper sowie Platten, als Klebstoff und Tauchbeschichtungsmittel, wobei Verfahren angewendet werden können, wie sie in der EP-A 0 031 305 beschrieben sind.

Ein weiterer Gegenstand vorliegender Erfindung sind beschichtete Gegenstände, die auf einer Oberfläche eine Schicht eines polymerisierten Produktes enthalten, das nach Verfahren gemäss vorliegender Erfindung hergestellt wird. Gegenstand der Erfindung sind ebenfalls verklebte Artikel, in denen Oberflächen durch ein Polymerisat, hergestellt nach einem Verfahren vorliegender Erfindung, miteinander verbunden sind.

Es wurde ferner gefunden, dass die Polymerisation in zwei Stufen durchgeführt werden kann : Eine Komposition, die einen wärmeaktivierbaren Radikalkatalysator und, wenn notwendig, einen Photoinitiator enthält, kann zunächst durch Bestrahlung, die zur vollständigen Polymerisation nicht ausreicht, teilweise polymerisiert werden und darauf durch Erwärmen und Aktivieren des Radikalkatalysators vollständig polymerisiert werden.

Ein weiterer Gegenstand vorliegender Erfindung ist daher auch eine Zusammensetzung, die die Komponenten a), b) und c) enthält, falls notwendig einen Photoinitiator, und einen wärmeaktivierbaren Radikalkatalysator sowie ein Verfahren zum Polymerisieren dieser Zusammensetzung durch Belichten und anschliessendes Erwärmen zur Aktivierung des Radikalkatalysators. Solche Zusammensetzungen können zur Herstellung von Filmklebern, Verbundstoffen, als Tauchbeschichtungsmittel und als Plattenformstoffe, wie in der US-PS 4 220 513 beschrieben, verwendet werden.

Die erfindungsgemässen Zusammensetzungen können als Zweikomponenten-Packungen vertrieben werden, wobei eine die Hauptkomponenten a) und c) und die andere die Komponente b) enthalten. Sie können auch für einen begrenzten Zeitraum als Mischungen unter Ausschluss von Licht und Radikalbildnern gelagert werden.

Die nachfolgenden Beispiele erläutern die Erfindung näher. Die Prozentangaben sind hierin Gew.%.

Herstellung von Ausgangsprodukten

a) 2,2-Bis(3-allyl-4-(3-methacryloyloxy)-2-(hydroxypropoxy)-phenyl)-propan wird wie in der EP-A 0 031 305 beschrieben hergestellt.

b) 2-(Methacryloyloxy)äthyl-methyl-5-carboxy-bicyclo[2.2.1]hept-2-en-6-carboxylat wird hergestellt, indem man eine Mischung aus Methylbicyclo[2.2.1]hept-2-en-5,6-dicarbonsäureanhydrid (89 g) und 2-Hydroxyäthylmethacrylat (65 g), das 0,44 g Tetramethylammoniumchlorid und 0,3 g 2,6-Di-tertiär-Butyl-p-cresol enthält, auf 90 °C erwärmt und 3 Stunden bei dieser Temperatur rührt.

c) 2-(Methacryloyloxy)äthyl-5-carboxycyclohex-1-en-4-carboxylat wird gemäss b) unter Verwendung von Tetrahydrophthalsäureanhydrid hergestellt.

d) 1-Allyloxycarbonyl-2-(3-methacryloyloxy-2-hydroxypropoxycarbonyl)-benzol wird folgendermassen hergestellt : 74 g Phthalsäureanhydrid, 87 g Allylalkohol und 0,16 g Tetramethylammoniumchlorid werden gemischt und 75 Minuten bei 80 °C gerührt. Danach wird abgekühlt und überschüssiger Allylalkohol im Vakuum entfernt. Der Rückstand wird mit 0,17 g Tetramethylammoniumchlorid und 0,35 g 2,6-Di-tertiärbutyl-4-methylphenol versetzt, auf 80 °C erwärmt und bei dieser Temperatur 71 g Glycidylmethacrylat tropfenweise während 1/2 Stunde zugegeben. Darauf wird für weitere 2 1/2 Stunden bei dieser Temperatur gerührt. Es verbleiben 174 g Produkt mit einem Epoxidgehalt von 0,4 Aequivalenten/kg.

e) N,N',N''-Tris(2-(mercaptoacetoxy)äthyl)-1,3,5-triazin-2,4,6-trion wird hergestellt, indem man eine Mischung aus 125,5 g Tris(2-hydroxyäthyl)isocyanurat, 142,6 g Thioglykolsäure, 4,14 g p-Toluolsulfonsäure und 250 ml Toluol in einer Dean and Stark-Apparatur während 4 1/2 Stunden am Rückfluss erhitzt. Danach wird abgekühlt, zweimal mit 250 ml Wasser gewaschen, einmal mit 250 ml einer 5 %-wässrigen Natriumbicarbonatlösung, nochmals mit 250 ml Wasser gewaschen und darauf über $MgSO_4$ getrocknet, filtriert und das Toluol abdestilliert. Es verbleiben 190 g Produkt mit einem SH-Gehalt von 5,9 Aequivalenten/kg.

f) 1,3-Bis(2-(mercaptoacetyloxy)äthyl)-5,5-dimethylhydantoin wird gemäss e) durch Umsetzung von 113 g 1,3-Bis(2-hydroxyäthyl)-5,5-dimethyl-hydantoin und 96,6 g Thioglykolsäure erhalten. Ausbeute 138,5 g mit einem SH-Gehalt von 5,3 Aequivalenten/kg.

## Beispiel 1

Eine Mischung von 10 g 2,2-Bis(3-allyl-4-(3-methacryloyloxy)-2-hydroxypropoxy)phenyl)-propan, 5 g 2-(Methacryloyloxy)-äthylmethyl-5-carboxybicyclo[2.2.1]hept-2-en-6-carboxylat, 3,8 g Pentaerythrittetrathioglykolat (1 Thioläquivalent pro Alkylgruppe) und 0,56 g Benzyldimethylketal werden als 10 µm dicker Film auf ein kupferkaschiertes Laminat aufgebracht.

Dann wird mit einer Quecksilberbogenlampe (80 W pro cm) aus einer Entfernung von 8 cm für 1 sek. belichtet, um einen klebfreien Film zu erhalten. Darauf wird weitere 15 min durch ein Negativ belichtet (Quecksilberbogenlampe, 30 W pro cm bei 22 cm Abstand). Hierauf wird mit einer 1 %igen wässrigen NaOH-Lösung entwickelt. Man erhält ein gutes Bild, das durch eine nachfolgende Behandlung des Laminates in 10 %iger wässriger NaOH-Lösung wieder entfernt werden kann.

## Beispiel 2

Das Verfahren von Beispiel 1 wird wiederholt unter Verwendung von Acrylsäure anstelle des Heptencarboxylats. Nach der Entwicklung erhält man ein gutes Bild.

## Beispiel 3

Beispiel 1 wird unter Verwendung von 10 g 2-(Methacryloyloxy)äthyl-5-carboxy-cyclohex-1-en-4-carboxylat anstelle des Heptencarboxylats und 0,71 g Benzyldimethylketal wiederholt. Zur Herstellung eines klebfreien Filmes wird 2 sek. belichtet. Nach der Entwicklung erhält man ein gutes Bild, das durch eine nachfolgende Behandlung mit 5 %iger NaOH-Lösung wieder entfernt werden kann.

## Beispiel 4

Das Verfahren von Beispiel 1 wird unter Verwendung von 5,6 g N,N',N''-Tris-(2-(mercaptoacetyloxy)äthyl-1,3,5-triazin-2,4,6-trion anstelle von Pentaerythrittetrathioglykolat und 0,56 g Benzyldimethylketal wiederholt. Es muss nur 10 min belichtet werden, um nach der Entwicklung ein gutes Bild zu erhalten.

## Beispiel 5

Das Verfahren von Beispiel 1 wird unter Verwendung von 6,2 g 1,3-Bis-(2-(mercaptoacetyloxy)äthyl)-5,5-dimethylhydantoin anstelle von Pentaerythrittetrathioglykolat und 0,65 g Benzyldimethylketal wiederholt. Nach der Entwicklung erhält man ein gutes Bild.

## Beispiel 6

Eine Mischung aus 10 g 2,2-Bis(3-allyl-4-(3-methacryloyloxy)-2-hydroxypropoxy)phenyl)propan, 5 g 2-(Methacryloyloxy)äthyl-5-carboxycyclo-hex-1-en-4-carboxylat, 6,2 g 1,3-Bis(2-mercaptoacetyloxy)äthyl)-5,5-dimethylhydantoin und 0,15 g 2,2'-Azobis(2-methylpropionitril wird als 10 µm dicker Film auf eine Zinnplatte aufgebracht und durch Erwärmen auf 120 °C während 10 min gehärtet. Der erhaltene Ueberzug ist gegen Lösungsmittel beständig.

Beispiel 7

Eine Mischung aus 7 g 1-Allyloxycarbonyl-2-(3-methacryloyloxy-2-hydroxypropoxy)carbonylbenzol, 1,4 g Acrylsäure, 2,2 g Aethylenglykoldithioglykolat und 0,2 g Benzyldimethylketal werden wie in Beispiel 1 verarbeitet.

Die Belichtung zur Herstellung eines klebfreien Films erfolgt während 10 sek. und die Belichtung durch ein Negativ während 20 min. Nach der Entwicklung erhält man ein gutes Bild.

**Patentansprüche**

1. Polymerisierbare Zusammensetzung, enthaltend

a) eine Verbindung, die im Molekül (1) mindestens eine Acryloyloxy- und/oder Methacryloyloxygruppe und (2) mindestens eine Allyl-, Methallyl- und/oder 1-Propenylgruppe, die entweder direkt oder über ein Sauerstoffatom oder eine —OCO-Gruppe an ein Kohlenstoffatom eines aromatischen Ringes gebunden sind, enthält,

b) eine Verbindung, die im Molekül (3) mindestens eine Acryloyloxy- und/oder Methacryloyloxygruppe und (4) mindestens eine freie Carboxylgruppe enthält, und

c) eine Verbindung mit mindestens zwei an aliphatische C-Atome gebundene SH-Gruppen in einer Menge, dass auf eine Allyl-, Methallyl- und 1-Propenylgruppe in a) mindestens 0,8 SH-Gruppen und auf eine Acryloyl-, Methacryloyl-, Allyl-, Methallyl- und 1-Propenylgruppe in a) und b) weniger als 1,0 SH-Gruppen kommen.

2. Zusammensetzung gemäss Anspruch 1, worin Komponente a) insgesamt zumindest 3 der Gruppen (1) und (2) enthält.

3. Zusammensetzung gemäss den Ansprüchen 1 oder 2, worin jede der Acryloyloxy- oder Methacryloyloxygruppen in Komponente a) direkt oder über eine Gruppe der Formeln

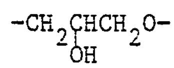 (I)

oder

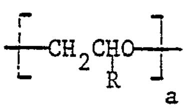 (II)

worin R ein Wasserstoffatom oder Methyl und a eine Zahl von 1 bis 6 bedeutet, an ein Kohlenstoffatom eines aromatischen Kernes gebunden ist.

4. Zusammensetzung gemäss Anspruch 3, worin Komponente a) ein mehrwertiges Phenol ist, worin zumindest 2 phenolische Hydroxylgruppen entweder direkt oder über (endständige) Sauerstoffatome der Gruppen der Formeln I oder II durch Acryloyl oder Methacryloyl verestert sind und zumindest 2 phenolische Hydroxylgruppen mit Allyl, Methallyl oder 1-Propenyl veräthert sind.

5. Zusammensetzung gemäss Anspruch 3, worin Komponente a) ein mehrwertiges Phenol ist, von dem zumindest zwei phenolische Hydroxylgruppen entweder direkt oder über Sauerstoffatome von Gruppen der Formeln I oder II mit Acryloyloxy oder Methacryloyloxy verestert sind und zumindest zwei Kohlenstoffatome des mehrwertigen Phenols im Benzol- oder Naphthalinkern durch mindestens zwei Gruppen von Allyl, Methallyl und 1-Propenyl substituiert sind.

6. Zusammensetzung gemäss Anspruch 1, worin Komponente a) eine Polycarbonsäure ist, in der zumindest eine Carboxylgruppe über eine der Gruppen der Formeln I oder II mit Acryloyl oder Methacryloyl verestert ist und zumindest eine Carboxylgruppe direkt mit einer Gruppe, ausgewählt aus Allyl, Methallyl und 1-Propenyl, verestert sind.

7. Zusammensetzung gemäss den Ansprüchen 1 bis 6, in der die oder jede Acryloyloxy- oder Methacryloyloxygruppe in Komponente b) an ein Wasserstoffatom oder direkt oder über eine mit Carboxyl substituierte Gruppe an ein Kohlenstoffatom einer aliphatischen, cycloaliphatischen oder aromatischen Gruppe oder ein Ringstickstoffatom eines heterocyclischen Ringes gebunden ist.

8. Zusammensetzung gemäss Anspruch 7, in welcher die Carboxyl substituierte Gruppe der Formel

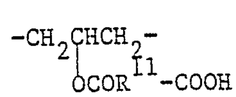 (XIX)

entspricht, worin $R^{11}$ Alkylen, Arylen oder Aralkylen ist, die durch eine oder mehr Carbonsäuregruppen substituiert sein kann, wobei das Alkylen und die Alkylengruppe im Aralkylen 2 bis 10 C-Atome und das Arylen und die Arylengruppe im Aralkylen 6 bis 10 C-Atome aufweisen.

9. Zusammensetzung gemäss den Ansprüchen 1 bis 8, in welcher Komponente b) in einer Menge

vorhanden ist, dass pro Acryloyloxy- und Methacryloyloxygruppe der Komponente a) 0,75 bis 1,25 dieser Gruppen der Komponente b) vorhanden sind.

10. Zusammensetzung gemäss den Ansprüchen 1 bis 9, worin Komponente c) ein Ester einer Monomercaptoalkylencarbonsäure mit einem mehrwertigen Alkohol oder ein Ester eines einwertigen aliphatischen Monomercaptoalkohols mit einer Polycarbonsäure ist.

## Claims

1. A polymerisable composition comprising

a) a compound containing in the molecule (1) at least one acryloyloxy and/or methacryloyloxy group, (2) at least one allyl, methallyl, and/or 1-propenyl group, each of which is attached, either direct or through an oxygen atom or an —OCO-group, to a carbon atom of an aromatic ring,

b) a compound containing in the molecule (3) at least one acryloyloxy and/or methacryloyloxy group and (4) at least one free carboxyl group, and

c) a compound containing at least two SH groups attached to aliphatic carbon atoms, in an amount as to provide at least 0.8 such SH group per allyl, methallyl and 1-propenyl group in (a) but less than 1.0 such SH group per acryloyl, methacryloyl, allyl, methallyl and 1-propenyl group in (a) with (b).

2. A composition according to claim 1, in which component (a) contains a total of at least three of the groups (1) and (2).

3. A composition according to either of claims 1 or 2, in which the or each acryloyloxy or methacryloyloxy group in component (a) is attached to a carbon atom of an aromatic nucleus, either direct or through a group of formula

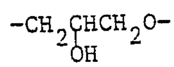

(I)

or

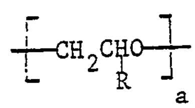

(II)

wherein R is a hydrogen atom or a methyl group and a is an integer from 1 to 6.

4. A composition according to claim 3, in which component (a) is a polyhydric phenol, at least two phenolic hydroxyl groups of which are esterified with acryloyl or methacryloyl, either direct or through the (terminal) oxygen atoms of the groups of formula I or II, and at least two phenolic hydroxyl groups of which are etherified with allyl, methallyl or 1-propenyl.

5. A composition according to claim 3, in which component (a) is a polyhydric phenol, at least two phenolic hydroxyl groups of which are esterified with acryloyloxy or methacryloyloxy groups, either direct or through the oxygen atoms of the groups of formula I or II, at least 2 carbon atoms in the benzene or naphthalene nucleus of the polyhydric phenol being substituted by at least two groups selected from allyl, methallyl and 1-propenyl groups.

6. A composition according to claim 1, in which component (a) is a polycarboxylic acid, at least one carboxylic acid group of which is esterified with acryloyl or methacryloyl through one of the groups of formula I or II and at least one carboxylic acid group of which is esterified direct with a group selected from allyl, methallyl and 1-propenyl.

7. A composition according to any one of claims 1 to 6, in which the or each acryloyloxy or methacryloyloxy group in component (b) is attached to a hydrogen atom or is attached, either direct or through a carboxyl-containing group, to a carbon atom of an aliphatic, cycloaliphatic or aromatic group or to a ring nitrogen atom of a heterocyclic ring.

8. A composition according to claim 7, in which said carboxyl-containing group is of formula

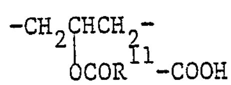

(XIX)

wherein $R^{11}$ is an alkylene, arylene or aralkylene group, each of which may be substituted by one or more carboxylic acid groups, said alkylene group and the alkylene moiety of the aralkylene group having from 2 to 10 carbon atoms, and said arylene group and the arylene moiety of the aralkylene group having from 6 to 10 carbon atoms.

9. A composition according to any one of claims 1 to 8, in which component (b) is present in an amount providing from 0.75 to 1.25 groups of said component (b) per acryloyloxy- and methacryloyloxy group of component (a).

10. A composition according to any one of claims 1 to 9, wherein component (c) is an ester of a

monomercaptanalkylene-carboxylic acid with a polyhydric alcohol or of a monohydric aliphatic monomercaptan alcohol with a polycarboxylic acid.

**Revendications**

1. Composition polymérisable qui renferme :

a) un composé dont la molécule contient (1) au moins un radical acryloyloxy et/ou méthacryloyloxy et (2) au moins un radical allyle, méthallyle et/ou propène-1 yle, reliés à un atome de carbone d'un cycle aromatique soit directement soit par l'intermédiaire d'un atome d'oxygène ou d'un radical —OCO—,

b) un composé dont la molécule contient (3) au moins un radical acryloyloxy et/ou méthacryloyloxy et (4) au moins un radical carboxy libre, et

c) un composé contenant au moins deux radicaux —SH liés à des atomes de carbone aliphatiques, en une quantité telle qu'il y ait, pour un radical allyle, méthallyle et propène-1 yle dans a), au moins 0,8 radical —SH et, pour un radical acryloyle, méthacryloyle, allyle, méthallyle et propène-1 yle dans a) et b), moins de 1,0 radical —SH.

2. Composition selon la revendication 1 dans laquelle la composante a) contient, au total, au moins 3 des radicaux (1) et (2).

3. Composition selon l'une des revendications 1 et 2, dans laquelle chacun des radicaux acryloyloxy ou méthacryloyloxy, dans la composante a), est lié à l'atome de carbone d'un noyau aromatique soit directement soit par l'intermédiaire d'un radical répondant à la formule I :

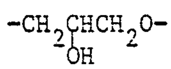

(I)

ou à la formule II :

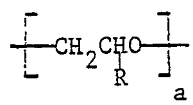

(II)

dans laquelle R représente un atome d'hydrogène ou un radical méthyle et a un nombre de 1 à 6.

4. Composition selon la revendication 3 caractérisée en ce que la composante a) est un polyphénol dans lequel au moins 2 radicaux hydroxy phénoliques sont estérifiés, soit directement soit par l'intermédiaire d'atomes d'oxygène (terminaux) des radicaux de formule I ou II, par un radical acryloyle ou méthacryloyle, et au moins 2 radicaux hydroxy phénoliques sont éthérifiés par un radical allyle, méthallyle ou propène-1 yle.

5. Composition selon la revendication 3 caractérisée en ce que la composante a) est un polyphénol dans lequel au moins 2 radicaux hydroxy phénoliques sont estérifiés, soit directement soit par l'intermédiaire d'atomes d'oxygène de radicaux de formule I ou II, par un radical acryloyle ou méthacryloyle, et au moins deux atomes de carbone du polyphénol portent, sur un noyau benzénique ou un noyau naphtalénique, au moins deux radicaux pris dans l'ensemble constitué par les radicaux allyle, méthallyle et propène-1 yle.

6. Composition selon la revendication 1 caractérisée en ce que la composante a) est un acide polycarboxylique dans lequel au moins un radical carboxy est estérifié, par l'intermédiaire d'un des radicaux de formule I ou II, par un radical acryloyle ou méthacryloyle, et au moins un radical carboxy est estérifié directement par un radical pris dans l'ensemble constitué par les radicaux allyle, méthallyle et propène-1 yle.

7. Composition selon l'une quelconque des revendications 1 à 6, caractérisée en ce que le radical ou chacun des radicaux acryloyloxy ou méthacryloyloxy, dans la composante b), est lié à un atome d'hydrogène ou, directement ou par l'intermédiaire d'un radical porteur d'un carboxy, à un atome de carbone d'un radical aliphatique, cycloaliphatique ou aromatique ou à un atome d'azote intracyclique d'un noyau hétérocyclique.

8. Composition selon la revendication 7 dans laquelle le radical porteur d'un carboxy répond à la formule :

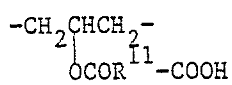

(XIX)

dans laquelle $R^{11}$ représente un radical alkylène, arylène ou aralkylène éventuellement porteur d'un ou de plusieurs radicaux carboxy, l'alkylène, de même que la partie alkylène du radical aralkylène, contenant de 2 à 10 atomes de carbone, et l'arylène, de même que la partie arylène de l'aralkylène, contenant de 6 à 10 atomes de carbone.

9. Composition selon l'une quelconque des revendications 1 à 8, caractérisée en ce que la

composante b) est présente en une quantité telle qu'il y ait, par radical acryloyloxy et méthacryloyloxy de la composante a), de 0,75 à 1,25 de ces radicaux de la composante b).

10. Composition selon l'une quelconque des revendications 1 à 9, caractérisée en ce que la composante c) est un ester dérivant d'un acide monomercapto-alkylène-carboxylique et d'un polyol, ou un ester dérivant d'un monomercapto-alcool aliphatique monovalent et d'un acide polycarboxylique.